# FASCICULE DE BREVET EUROPEEN

(11) **EP 0 514 286 B1**
(45) Date de publication et mention de la délivrance du brevet: **23.08.1995**
(21) Numéro de dépôt: 92420096.7
(22) Date de dépôt: 30.03.1992
(51) Int. Cl.: H01G 4/236

(54) **Traversée isolante pour un condensateur de puissance moyenne tension**
Isolierende Durchführung für einen Mittelspannung-Leistungskondensator
Insulated feed-through for a middle voltage power capacitor

(30) Priorité: 11.04.1991 FR 9104560; 06.09.1991 FR 9111135
(43) Date de publication de la demande: 19.11.1992
(73) Titulaire: SCHNEIDER ELECTRIC SA, 92100 Boulogne Billancourt (FR)
(72) Inventeur: Guegan, Bernard, F-38050 Grenoble Cedex (FR); Francisco, Stéphane, F-38050 Grenoble Cedex (FR); Mugniery, Gilles, F-38050 Grenoble Cedex (FR)
(74) Mandataire: Ritzenthaler, Jacques

(56) Documents cités:
- CA-A- 891 709
- DE-B- 1 056 686
- DE-C- 953 823
- FR-A- 1 069 087
- FR-A- 2 229 123
- GB-A- 1 429 937
- US-A- 3 388 211
- US-A- 4 965 407

## Description

L'invention est relative à une traversée isolante pour un condensateur de puissance moyenne ou haute tension ayant une cuve métallique étanche contenant un élément bobiné de condensateur, ladite traversée ayant un corps allongé isolant, percé sur toute sa longueur, dont la base est fixée à ladite cuve en regard d'un orifice ménagé dans cette cuve et dont le haut porte une borne métallique, reliée électriquement audit élément de condensateur par un conducteur s'étendant à l'intérieur de la traversée.

Une traversée isolante connue du genre mentionné, par exemple d'après le document GB-A-1 429 937, comporte un corps isolant en porcelaine dont les deux extrémités sont métallisées pour recevoir respectivement une coiffe constituant la borne métallique et éventuellement une coupelle métallique de solidarisation à la cuve.

La métallisation de l'une et/ou l'autre des deux extrémités du corps en porcelaine est faite par un dépôt de plusieurs couches métalliques, à base d'argent, de cuivre et d'étain, et sur ces parties métallisées sont brasées à l'étain, respectivement la coiffe et la coupelle. Ces opérations sont délicates et elles doivent être menées avec soin pour obtenir des liaisons étanches.

Par ailleurs, il a déjà été proposé selon le document US-A-4,965,407 de réaliser un corps isolant en résine cycloaliphatique moulé autour du conducteur.

Le but de la présente invention est la réalisation d'une traversée isolante améliorée, dont la mise en oeuvre est facilitée et ce but est atteint par l'emploi des caractéristiques de la revendication 1. Le pied en forme de manchon cylindro-quadrangulaire possède des rampes de traction terminées de plan de pincement et d'une butée positive opposée à une cavité d'anti-rotation. La fixation mécanique de la traversée sur la cuve du condensateur est obtenue par un simple engagement et rotation ferme de la base du corps isolant qui engendre un pincement de la paroi de la cuve. L'étanchéité de cette liaison est obtenue par un joint annulaire logé dans une gorge ménagée sur l'embase du corps isolant.

La section transversale du joint d'étanchéité est cylindrique et la section des gorges est avantageusement de forme rectangulaire, mais il est possible d'utiliser des gorges et des joints de toute autre section.

Le joint est en résine silicône chargé de silice, ou en tout autre matériau. Le corps isolant est en résine cycloaliphatique pour une utilisation en extérieur, et la borne métallique est agencée en insert, solidarisé au corps isolant lors du moulage de ce dernier.

La partie inférieure de l'insert qui est enrobée dans la résine présente une surface moletée, assurant une bonne liaison entre la résine et l'insert ou toute autre forme permettant l'ancrage de la résine.

Cette partie inférieure est avantageusement une pièce massive cylindrique pleine ou percée axialement, ce perçage s'étendant d'ailleurs sur toute la longueur de l'insert et étant en alignement avec un perçage ménagé dans le corps isolant pour le passage d'un conducteur électrique de liaison entre l'élément du condensateur logé dans la cuve, et la borne externe.

L'application principale est la traversée pour un condensateur moyenne tension à cuve métallique étanche, par exemple du type décrit dans le brevet français n° 2.580.854, mais il est clair que d'autres applications peuvent être envisagées.

D'autres avantages et caractéristiques ressortiront plus clairement de la description qui va suivre, d'un mode de mise en oeuvre de l'invention, donné à titre d'exemple non limitatif et représenté aux dessins annexés dans lesquels:

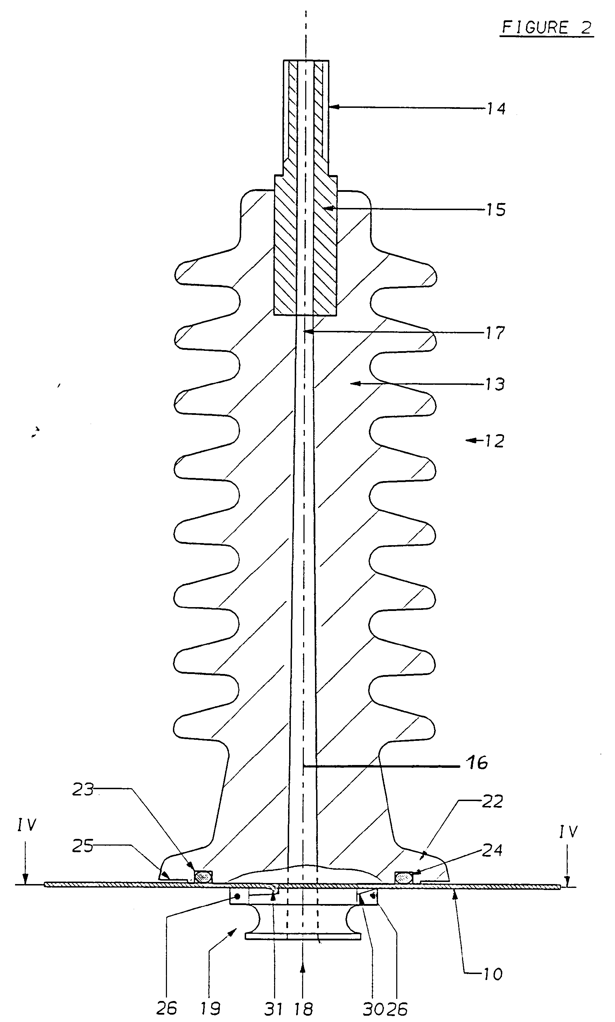

la figure 1 est une vue schématique en élévation d'une traversée selon l'invention, insérée dans l'orifice de la cuve et avant sa fixation par rotation partielle, la figure 2 est une vue en coupe de la traversée, partiellement arrachée, fixée sur la cuve.

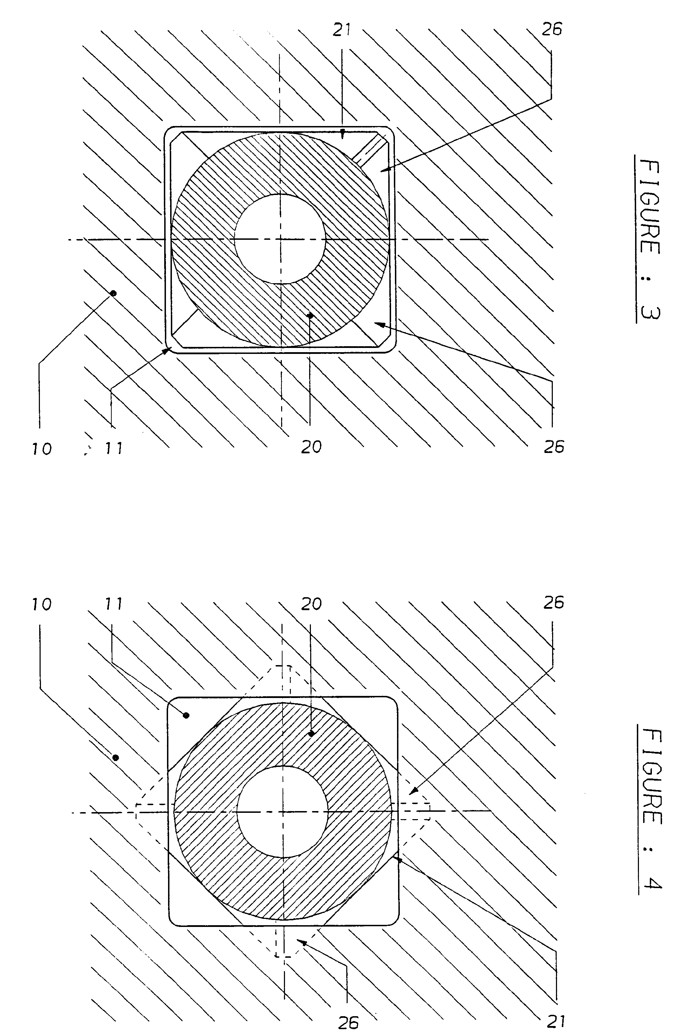

La figure 3 est une coupe suivant la ligne III - III de la figure 1.

La figure 4 est une coupe suivant la ligne IV - IV de la figure 2.

La figure 5, analogue à la figure 1 illustre une variante de réalisation.

Sur les figures, une paroi supérieure d'une cuve métallique 10 d'un condensateur moyenne tension présente un orifice polygonal, notamment carré 11, au droit duquel est fixée une traversée désignée par le repère général 12.

La traversée 12 est constituée par un corps moulé 13 en résine cycloaliphatique pour une utilisation en extérieur, et par un insert métallique 14, dont la base est noyée dans la résine lors du moulage du corps 13 et dont la partie supérieure est agencée en borne. La traversée 12 présente un axe longitudinal de révolution 16 et un perçage 17 s'étendant le long de cet axe de révolution 16 sur toute la longueur de la traversée 12.

A l'intérieur du perçage 17, s'étend un conducteur de liaison 18 qui relie électriquement la borne 14 aux élements de condensateur (non représentés) logés dans la cuve. Le conducteur de liaison 18 peut être noyé dans la résine lors du moulage du corps 13 et présenter à sa base un élément de connexion par vissage, soudage et tout autre moyen de liaison électrique de raccordement des éléments de condensateurs.

Le corps de révolution 13 présente sur sa face externe des ailettes d'allongement des lignes de fuite, bien connues des spécialistes. La surface externe de la base 15 de l'insert 14, en forme de pièce massive cylindrique présente un moletage ou toute autre forme d'ancrage assurant un accrochage efficace de la résine sur l'insert métallique, pour éviter tout rique de fuite dans cette zône.

La liaison étanche entre le corps isolant 13 et la paroi de la cuve 10 est réalisée par l'engagement du pied de borne profilé 19, comportant un manchon de centrage cylindrique 20 prolongé d'un manchon carré polygonal ou carré 21. La hauteur du manchon cylindrique 20 correspond sensiblement à l'épaisseur de la tôle de la paroi 10 et sa section s'inscrit dans l'orifice carré 11 à faible jeu. Le manchon carré 21, qui prolonge le manchon cylindrique 20, est de la taille de l'orifice carré 11 et ses quatre coins constituent des saillies latérales 26 par rapport au manchon cylindrique 20. Chaque coin confiné avec l'extrémité inférieure du corps 13 une gorge de largeur sensiblement égale à l'épaisseur de la tôle 10.

Le flanc de la gorge constitué par le manchon carré 21 est agencé en rampe 30 définissant un rétrécissement de la gorge, qui lors d'une rotation assure la fixation de la borne par un pincement de la paroi 10 insérée dans la gorge.

Le blocage en rotation de la borne est assuré par un ergot 31 ou une paire d'ergots opposés, constitué par une découpe pratiquée dans un côté ou dans des côtés opposés de l'orifice carré 11 pour former une languette repliée, vers l'intérieur qui pénêtre dans la gorge lors de la rotation de la borne. Le sens de flexion de l'ergot 31 correspond au sens de rotation de la borne pour sa fixation sur la paroi 10 et une rotation inverse est empêchée par le cabrage de l'ergot 31. En fin de rotation l'ergot 31 peut s'encliqueter dans une cavité ou venir en butée d'une saillie.

L'extrémité inférieure du corps isolant 13 est constituée d'une embase cylindrique 22, de diamètre suffisant pour assurer l'assise et la stabilité de l'assemblage mécanique. Deux gorges 23 et 25 de section différente sont ménagées sous cette embase 22. Dans la gorge 23 est logé un joint d'étanchéité 24, dans la gorge 25 est déposé un ciment colle d'herméticité et de scellement définitif. La section du joint torique 24 et de la gorge rectangulaire 23 assurent une étanchéité efficace au droit de la liaison entre le corps isolant 13 et la paroi 10.

L'étanchéité du perçage 17 est réalisée par la soudure de l'extrémité du conducteur 18 à la borne 14, ou par toute autre forme de liaison y compris à la partie inférieure dans l'hypothèse d'un conducteur de liaison 18 noyé dans la traversée.

La mise en oeuvre de l'invention ressort de l'exposé précédent :
- Après moulage du corps isolant 13 avec enrobage de l'insert 14, il suffit de mettre en place 1 joint d'étanchéité 24 dans le gorge 23, de déposer un cordon de ciment /colle de scellement dans la gorge 25 et d'engager le manchon cylindro-quadrangulaire 19 dans l'orifice 11 de la paroi 10 préalablement traité et d'effectuer une rotation du corps isolant 13 jusqu'à butée et encliquetage des ergots opposés 31 confectionnés au pourtour de l'orifice 11 de la paroi 10.
- Après avoir introduit le conducteur 18 dans le perçage 17, il suffit de souder son extrémité à la borne 14 en prenant soin d'obturer simultanément le perçage 17. Ces opérations ne nécessitent aucun soin particulier, et les risques de fuite de la traversée 12 sont quasi nuls, même supprimés dans le cas d'un conducteur 18 noyé dans la résine lors du moulage du corps 13. Il est clair que l'invention n'est pas limitée à une forme particulière de la traversée 12 ou de l'orifice 11, et que le principe est applicable à d'autres appareils électriques que les condensateurs de puissance.

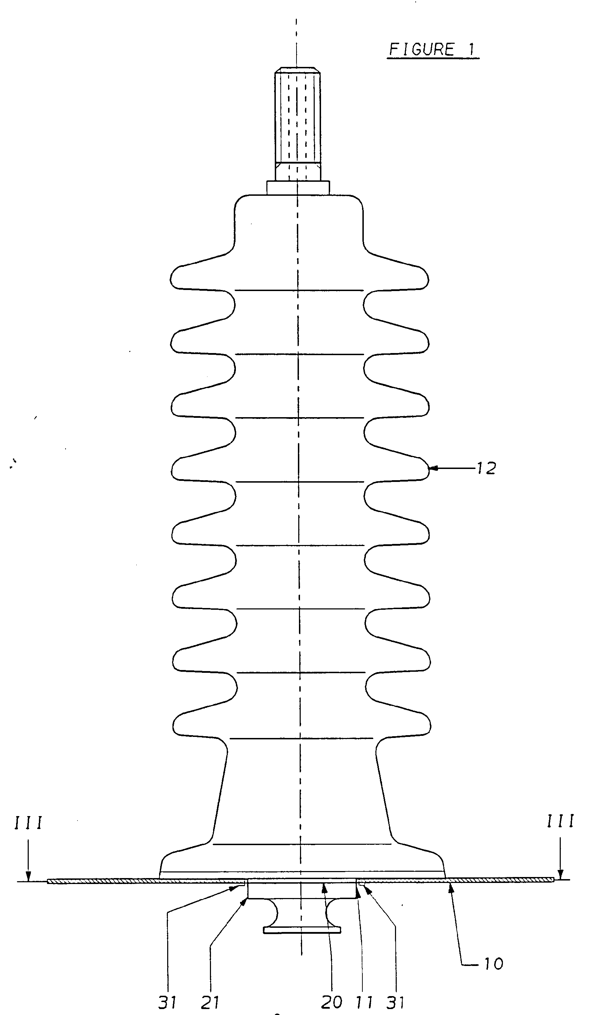

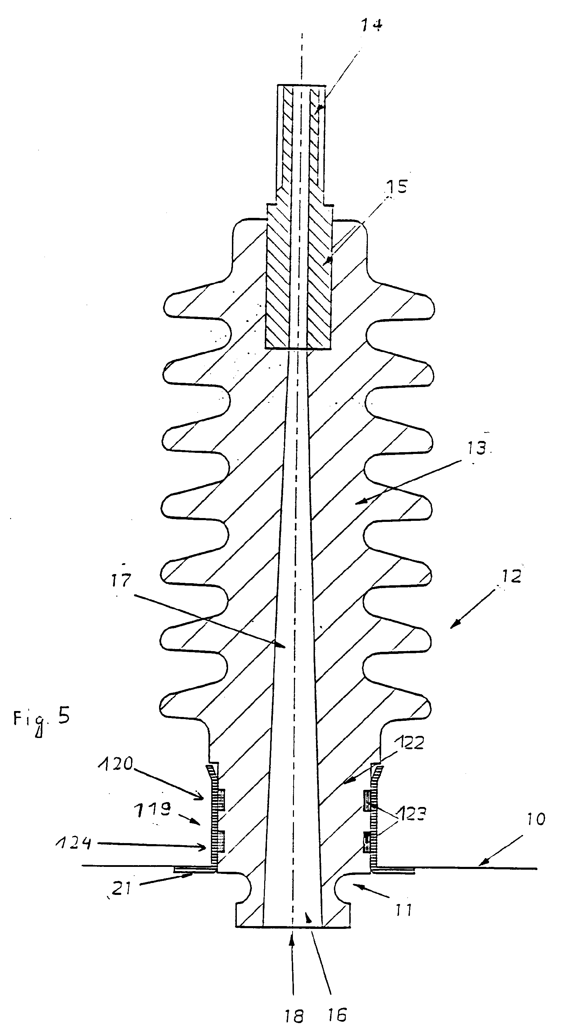

Sur la figure 5, qui illustre une variante de réalisation, les mêmes numéros de repère sont utilisés pour désigner des pièces analogues ou identiques à celles de la figure 1. La liaison étanche entre le corps isolant 13 et la paroi de la cuve 10 est réalisée par l'intermédiaire d'une collerette 119 comportant, d'une part un manchon cylindrique 120, et d'autre part une embase annulaire 121. Cette embase annulaire 121 est fixée par soudage ou brasage à la paroi 10, au droit de l'orifice 11. L'extrémité inférieure du corps d'isolant 13 est constituée par un fût cylindrique 122, de diamètre correspondant à celui du manchon 120 pour permettre un emboîtement en force du fût 122 dans le manchon 120. Deux gorges 123 sont ménagées dans le fût 122 en étant axialement espacées, et dans chacune des gorges 123 est logé un joint d'étanchéité 124. La section des joints 124 et des gorges 123 est avantageusement rectangulaire, et il est facile de voir que ces joints assurent une étanchéité efficace, au droit de la liaison entre le corps isolant 13 et la paroi 10.

## Revendications

1. Traversée isolante pour un condensateur de puissance moyenne ou haute tension ayant une cuve métallique (10) étanche contenant un élément bobiné de condensateur, ladite traversée ayant un corps allongé isolant (13) percé sur toute sa longueur dont la base est fixée d'une manière étanche à la cuve (10) au droit d'un orifice (11) ménagé dans cette cuve au moyen d'un joint annulaire (24) d'étanchéité, et dont le haut porte une borne métallique (14) reliée électriquement audit élément de condensateur par un conducteur (17) traversant ledit orifice (1) et s'étendant à l'intérieur de la traversée, caractérisé en ce que ledit corps (13) est une pièce moulée en résine cycloaliphatique, en ce que la section de l'orifice (11) dans la cuve est polygonale et en ce que la base de la traversée est prolongée par un pied (19) susceptible de s'emboîter dans ledit orifice (11) et comprenant successivement un tronçon cylindrique en forme de manchon (20) s'inscrivant dans le contour polygonal de l'orifice (11) et dont la hauteur correspond sensiblement à l'épaisseur de la paroi de la cuve (10), et un tronçon polygonal (21) de forme conjuguée à celle de l'orifice pour permettre une fixation de la traversée sur la cuve par insertion du pied (19) dans l'orifice (11) et par rotation partielle de la traversée, les angles (26) du tronçon polygonal (21) en saillie latérale, présentant des faces inclinées (30) qui coopèrent avec les bords de l'orifice (11) pour serrer la base de la traversée contre la cuve lors de la rotation partielle.

2. Traversée selon la revendication 1, caractérisée en ce que la base de la traversée porte une collerette annulaire venant en appui sur la paroi de la cuve autour dudit orifice (11) et que la collerette comporte une gorge (23) de logement du joint d'étanchéité (24) entourant l'orifice (11) ménagé dans la cuve et une gorge (25) de dépôt d'un ciment colle de scellement.

3. Traversée selon la revendication 1 ou 2, caractérisée en ce que le bord de l'orifice (11) comporte une patte (31) repliée vers l'intérieur de la cuve pour former un ergot (31) de blocage en rotation de la traversée.

4. Traversée selon la revendication 3, caractérisée en ce que le tronçon polygonal (21) présente une butée qui coopère avec ledit ergot (31) pour limiter la rotation de la traversée.

5. Traversée selon la revendication 3, caractérisée en ce que ledit ergot (31) s'incruste élastiquement dans le pied (19) de la traversée lors de la rotation pour former un blocage anti-retour.

6. Traversée selon la revendication 1, caractérisée en ce que la base de la traversée présente un fût cylindrique (122) emboîté de force dans un manchon cylindrique (120) doté d'une embase annulaire (121) soudée sur la cuve (10) et que ledit fût (122) présente une gorge (123) circonférentielle externe de logement d'un joint (124) d'étanchéité.

7. Traversée selon la revendication 6, caractérisée en ce que ledit fût (122) présente deux gorges (123) espacées de logement de deux joints (124) d'étanchéité, de section rectangulaire.

8. Traversée selon l'une quelconque des revendications précédentes, caractérisée en ce que ladite borne (14) est constituée par un insert métallique, dont la base (15) est enrobée dans la résine lors du moulage.

## Patentansprüche

1. Durchführungsisolator für einen Mittelspannungs- oder Hochspannungs-Leistungskondensator mit dichtgeschlossenem Metallgehäuse (10), der aus einem, auf seiner gesamten Länge durchbohrten länglichen Durchführungskörper (13) besteht, dessen unteres Ende über einen Dichtungsring (24) am Gehäuse (10) rechtwinklig zu einer in diesem Gehäuse ausgebildeten Öffnung (11) unter Ausbildung einer dichten Verbindung befestigt ist, und an dessen oberem Ende eine Metallklemme (14) angebracht ist, die über einen die genannte Öffnung (11) durchragenden und durch den Durchführungsisolator hindurchgeführten Leiter (18) elektrisch mit dem genannten Kondensatorelement verbunden ist, dadurch gekennzeichnet, daß der genannte Durchführungskörper (13) als aus einem cycloaliphatischen Harz bestehendes Formstoffteil ausgeführt ist, daß die im Gehäuse ausgebildete Öffnung (11) einen vieleckigen Querschnitt aufweist, daß der Durchführungsisolator an der Unterseite in einen Fußstutzen (19) übergeht, der dazu dient, in die genannte Öffnung (11) eingesetzt zu werden, und einen zylindrischen Abschnitt in Form einer Muffe (20), die in den vieleckigen Ausschnitt der Öffnung (11) eingesetzt wird und deren Höhe annähernd der Wanddicke des Gehäuses (10) entspricht, sowie einen vieleckigen Abschnitt (21) umfaßt, dessen Form an die Öffnung angepaßt ist, um durch Einsetzen des Fußstutzens (19) in die Öffnung (11) und Teildrehung des Durchführungsisolators eine Befestigung des Durchführungsisolators auf dem Gehäuse zu ermöglichen, wobei die seitlich herausstehenden Ecken (26) des vieleckigen Abschnitts (21) Schrägen (30) aufweisen, die mit den Rändern der Öffnung (11) zusammenwirken, um durch die Teildrehung die Unterseite des Durchführungsisolators auf dem Gehäuse festzuspannen.

2. Durchführungsisolator nach Anspruch 1, dadurch gekennzeichnet, daß die Unterseite des Durchführungsisolators einen ringförmigen Kragen aufweist, der um die genannte Öffnung (11) auf der Wand des Gehäuses aufliegt, und daß der Kragen eine Nut (23) zur Aufnahme der um die im Gehäuse ausgebildete Öffnung (11) herum geführten Dichtung (24) sowie eine Nut (25) zur Aufnahme eines Klebkitts zur Versiegelung aufweist.

3. Durchführungsisolator nach Anspruch 1 oder 2, dadurch gekennzeichnet, daß der Rand der Öffnung (11) eine in das Gehäuseinnere gebogene Zunge (31) aufweist, um eine Rastnase (31) zum Blockieren des Durchführungsisolators in Drehrichtung zu bilden.

4. Durchführungsisolator nach Anspruch 3, dadurch gekennzeichnet, daß der vieleckige Abschnitt (21) einen Anschlag aufweist, der mit der genannten Rastnase (31) zusammenwirkt, um die Drehung des Durchführungsisolators zu begrenzen.

5. Durchführungsisolator nach Anspruch 3, dadurch gekennzeichnet, daß die genannte Rastnase (31) bei der Drehung elastisch in den Fußstutzen (19) des Durchführungsisolators eingreift, um eine Rückdrehsperre zu bilden.

6. Durchführungsisolator nach Anspruch 1, dadurch gekennzeichnet, daß die Unterseite des Durchführungsisolators einen Schaft (122) aufweist, der unter Krafteinwirkung in eine zylindrische Muffe (120) mit einem auf das Gehäuse (10) aufgeschweißten Bodenring (121) eingesetzt wird, und daß der genannte Schaft (122) eine äußere Umlaufnut (123) zur Aufnahme einer Dichtung (124) aufweist.

7. Durchführungsisolator nach Anspruch 6, dadurch gekennzeichnet, daß der genannte Schaft (122) zwei in einem bestimmten Abstand voneinander angeordnete Nuten (123) mit rechteckigem Querschnitt zur Aufnahme von je einer Dichtung (124) aufweist.

8. Durchführungsisolator nach irgendeinem der vorhergehenden Ansprüche, dadurch gekennzeichnet, daß die genannte Klemme (14) als Metalleinsatz ausgeführt ist, dessen Unterteil (15) während des Gießvorgangs in das Harz eingelassen wird.

## Claims

1. An insulating bushing for a medium or high voltage power capacitor having a sealed metal tank (10) containing a wound capacitor element, said bushing having an elongated insulating body (13) drilled over its whole length and whose base is tightly fixed to the tank (10) opposite an orifice (11) arranged in this tank by means of an annular seal (24), and whose top bears a metallic terminal (14) electrically connected to said capacitor element by a conductor (17) passing through said orifice (11) and extending inside the bushing, characterized in that said body (13) is a moulded part made of cyclo-aliphatic resin, that the cross-section of the orifice (11) in the tank is polygonal, and that the base of the bushing is extended by a foot (19) designed to fit into said orifice (11) and successively comprising a cylindrical section in the form of a sleeve (20) inscribed in the polygonal contour of the orifice (11) and whose height corresponds appreciably to the thickness of the wall of the tank (10), and a polygonal section (21) of conjugate shape to that of the orifice to enable the bushing to be secured to the tank by inserting the foot (19) in the orifice (11) and partially rotating the bushing, the corners (26) of the polygonal section (21) which protrude out sideways presenting inclined faces (30) which cooperate with the edges of the orifice (11) to press the base of the bushing against the tank when partial rotation is performed.

2. The bushing according to claim 1, characterized in that the base of the bushing bears an annular flange coming up against the stop formed by the wall of the tank around said orifice (11) and that the flange comprises a groove (23) for housing said seal (24) surrounding the orifice (11) arranged in the tank and a groove (25) for depositing a sealing glue cement.

3. The bushing according to claim 1 or 2, characterized in that the edge of the orifice (11) comprises a lug (31) folded towards the inside of the tank to form a pin (31) blocking the bushing in rotation.

4. The bushing according to claim 3, characterized in that the polygonal section (21) presents a stop which cooperates with said pin (31) to limit the rotation of the bushing.

5. The bushing according to claim 3, characterized in that said pin (31) is flexibly encrusted in the foot (19) of the bushing when rotation is performed to form an anti-return locking.

6. The bushing according to claim 1, characterized in that the base of the bushing presents a cylindrical shaft (122) fitted by force into a cylindrical sleeve (120) having an annular base (121) welded onto the tank (10) and that said shaft (122) presents an external circumferential groove (123) for housing a seal (124).

7. The bushing according to claim 6, characterized in that said shaft (122) presents two spaced apart grooves (123) for housing two seals (124) of rectangular cross-section.

8. The bushing according to any one of the foregoing claims, characterized in that said terminal (14) is formed by a metal insert, whose base (15) is coated in the resin when moulding takes place.
